Europäisches Patentamt

European Patent Office

Office européen des brevets

(11) Veröffentlichungsnummer: **0 190 436 B1**

# EUROPÄISCHE PATENTSCHRIFT

(45) Veröffentlichungstag der Patentschrift: 16.05.90

(51) Int. Cl.⁵: **B 23 K 9/12**

(21) Anmeldenummer: 85115665.3

(22) Anmeldetag: 09.12.85

(54) Planetare Drahtzuführvorrichtung.

(30) Priorität: 10.12.84 BG 67828/84

(43) Veröffentlichungstag der Anmeldung:
13.08.86 Patentblatt 86/33

(45) Bekanntmachung des Hinweises auf die
Patenterteilung:
16.05.90 Patentblatt 90/20

(84) Benannte Vertragsstaaten:
AT CH DE FR GB IT LI SE

(56) Entgegenhaltungen:
BG-A- 32 324
US-A-4 429 821

(73) Patentinhaber: Z I I T
7 km, Blvd. Lenin
Sofia (BG)

(72) Erfinder: Jelezov, Jivko Yordanov, Dipl.-Ing.
Blvd. Dondukov 57
Sofia (BG)
Erfinder: Marinov, Julian Parvov, Dipl.-Ing.
Geo Milev-Str. 45
Sofia (BG)
Erfinder: Bogdanov, Todor Damyanov, Dipl.-Ing.
Buntovnik-Str. 64-2
Sofia (BG)
Erfinder: Popov, Peter Atanassov, Dipl.-Ing.
Blvd. Bulgaria 126
Sofia (BG)
Erfinder: Tzanov, Peter Spassov, Dipl.-Ing.
Complex Lyulin, Bl. 428-1
Sofia (BG)
Erfinder: Kantchev, Dimiter Vassilev, Dipl.-Ing.
Krivolak-Str. 63
Sofia (BG)

(74) Vertreter: Finck, Dieter et al
Patentanwälte v. Füner, Ebbinghaus, Finck
Mariahilfplatz 2 & 3
D-8000 München 90 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine planetare Drahtzuführvorrichtung mit einem aus zwei gleichen, einander berührenden, lösbar miteinander koaxial verbundenen Elementen bestehenden Gehäuse, mit wenigstens einer in den Elementen ausgebildeten koaxialen halbzylindrischen Aussparungen angeordneten Baugruppe und mit zwei jeweils in der zugeordneten Baugruppe um eine Lagerachse drehbar gelagerten Antriebsrollen mit hyperbolischem Profil, die jeweils durch einen Scheibenfedersatz in Richtung der gemeinsamen Achse der Elemente gedrückt werden, wobei die Lagerachsen in einem Winkel zueinander angeordnet sind und die in der Berührungsebene der Elemente liegende gemeinsame Achse der Aussparungen senkrecht schneiden und die gemeinsame Achse der Elemente die Winkelhalbierende des Winkels zwischen den Lagerachsen ist.

Eine solche Drahtzuführvorrichtung ist aus der US—A 4 429 821 bekannt. Diese Drahtzuführvorrichtung weist zwei halbkugelförmige Elemente auf, die mittels Schrauben miteinander verbunden sind. Zwischen den zwei halbkugelförmigen Elementen ist eine Baugruppe angeordnet, die eine mittige Nabe und zwei gegenüber angeordnete zylindrische Abschnitte aufweist. In der Nabe sind zwei teilweise zylindrische Lagersitze vorgesehen, in denen die Achsen der gegenüberliegenden Antriebsrollen angeordnet sind. Die Achsen werden von Scheibenfedern in Richtung der jeweiligen Lagersitze gedrückt, um eine Druckkraft auf den Draht auszuüben, die zu dessen Führung benötigt wird. Der Schwerpunkt, der von der Scheibenfeder angedrückten Teile, d. h. hier der Lagerachse und ihrer zugeordneten Antriebsrolle, liegt auf der Drehachse der Lagerachse und somit zwischen der Scheibenfeder und der Rotationsachse der Vorrichtung. Dies bewirkt, daß die bei der Drehung der Drahtzuführvorrichtung auftretenden Zentrifugalkräfte der Lagerachse und der Antriebsrolle der Kraft der Scheibenfeder entgegenwirken. Dies kann bei hohen Drehzahlen dazu führen, daß die von den Scheibenfedern aufgebrachte Druckkraft aufgehoben wird und somit kein Druck von der Antriebsrolle auf den Draht wirkt.

Der Erfindung liegt die Aufgabe zugrunde, die planetare Drahtzuführungsvorrichtung der gattungsgemäßen Art mit konstruktiv einfachen Mitteln so weiterzubilden, daß auch bei hohen Drehzahlen eine ausreichende Druckkraft auf den zu führenden Draht ausgeübt wird.

Diese Aufgabe wird erfindungsgemäß dadurch gelöst, daß

die Elemente des Gehäuses ein linker Zylinder und ein rechter Zylinder sind, in denen jeweils ein zu ihnen koaxialer zylindrischer Vorsprung vorgesehen ist, in dessen vorderem Abschnitt ein Zentrierhohlkegel, eine Stellgewindebohrung und eine Zentralöffnung ausgebildet sind,

daß in den Zylindern Becheraufnahmeaussparungen, Federaufnahmeaussparungen und Buchsenaufnahmeaussparungen koaxial und halbzylindrisch ausgebildet sind, deren gemeinsame Achse senkrecht zur Längsachse der Zylinder in der Berührebene der Zylinder liegt und in denen zwei gleiche Baugruppen, eine linke Baugruppe und eine rechte Baugruppe angebracht sind, die jeweils aus einem Träger-Richtungselement bestehen, das als zylindrischer Becher ausgebildet ist, dessen Boden eine Öffnung, an der Innenseite eine ebene Oberfläche und an der Außenseite eine zylindrische Oberfläche aufweist,

daß die Antriebsrollen jeweils an den Enden des entsprechenden Träger-Richtungselements auf einer Tragachse befestigt sind, in der die Lagerachse angeordnet ist,

daß an den Enden der beiden Träger-Richtungselemente Lagerbuchsen angeordnet sind, die zusammen mit dem in den entsprechenden Federaufnahmeaussparungen angeordneten Scheibenfedersatz die linke Baugruppe bzw. die rechte Baugruppe an die zylindrischen Vorsprünge drücken,

daß die Seitenflächen der Träger-Richtungselemente jeweils zwei viertelzylindrische Abschnitte aufweisen, in denen eine vordere Halböffnung bzw. eine hintere Halböffnung koaxial zueinander und zu den Zylindern und koaxialen Lageröffnungen ausgebildet sind, und

daß die viertelzylindrischen Abschnitte der beiden Träger-Richtungselemente aneinanderliegen, wobei die gemeinsame Achse der Lageröffnungen mit der Längsachse der Zylinder einen Winkel bilden, der halb so groß ist wie der Winkel zwischen den beiden Lagerachsen.

Bei der erfindungsgemäßen Drahtzuführvorrichtung liegt der Schwerpunkt der Anordnung, auf die die entsprechende Scheibenfeder die Druckkraft ausübt bezüglich der Scheibenfeder jenseits der Drehachse der Drahtzuführvorrichtung. Dies hat zur Folge, daß die bei der Drehung der Drahtzuführvorrichtung auftretenden Zentrifugalkräfte in Richtung der Federkraft der entsprechenden Scheibenfeder wirken, wodurch diese Kräfte addiert werden. Die Addition der Kräfte bewirkt, daß auch bei hohen Drehzahlen eine ausreichende Kraft auf den Draht aufgebracht wird.

Ein Ausführungsbeispiel der Erfindung wird anhand von Zeichnungen näher erläutert. Es zeigen:

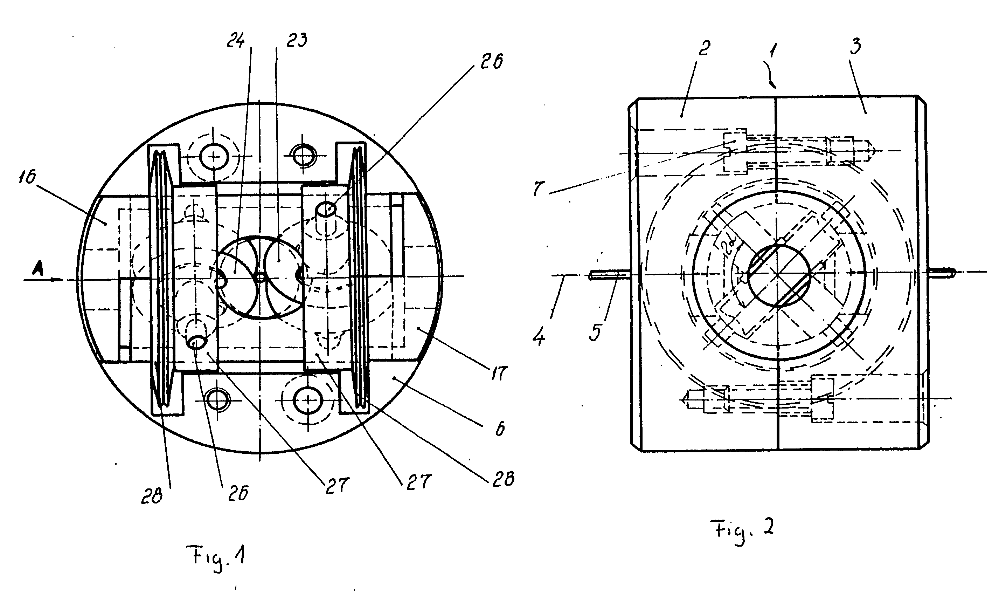

Fig. 1 eine Ansicht der Berührebene zweier Zylinder eines Gehäuses einer planetarischen Drahtzuführvorrichtung,

Fig. 2 die Ansicht A von Fig. 1,

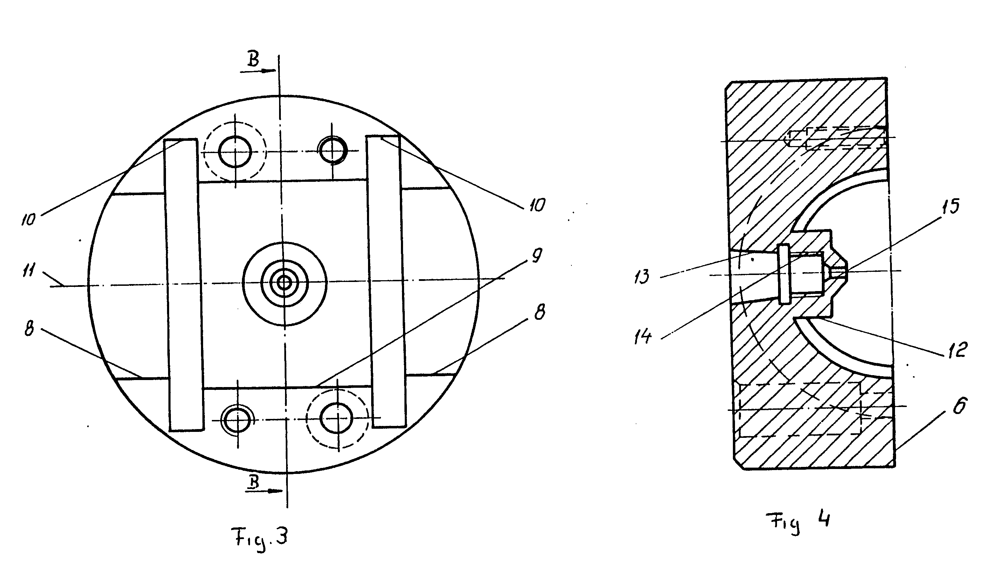

Fig. 3 eine Ansicht auf die Berührebene eines Zylinders,

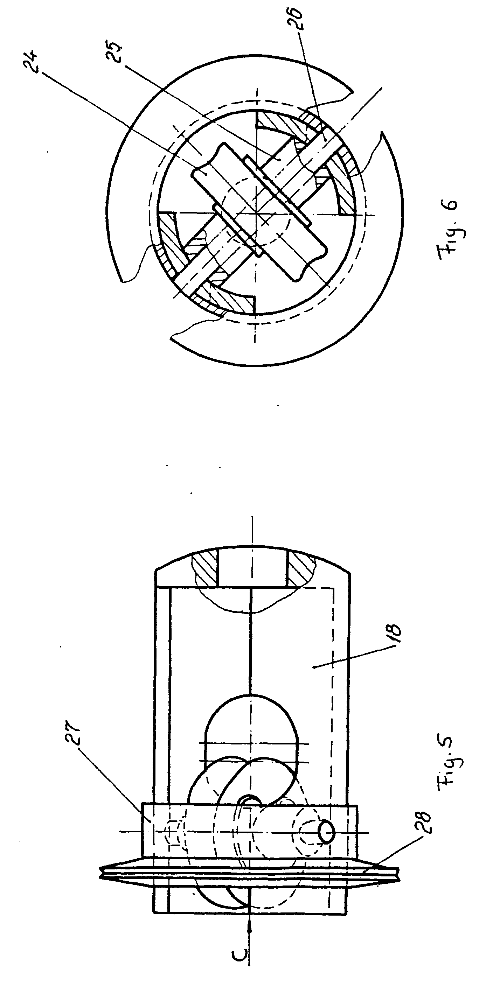

Fig. 4 den Teilschnitt B-B von Fig. 3,

Fig. 5 eine Ansicht einer in Fig. 1 rechten Baugruppe,

Fig. 6 die Ansicht C von Fig. 5,

Fig. 7 eine Ansicht eines Träger-Richtungselements der Baugruppe von Fig. 5 und

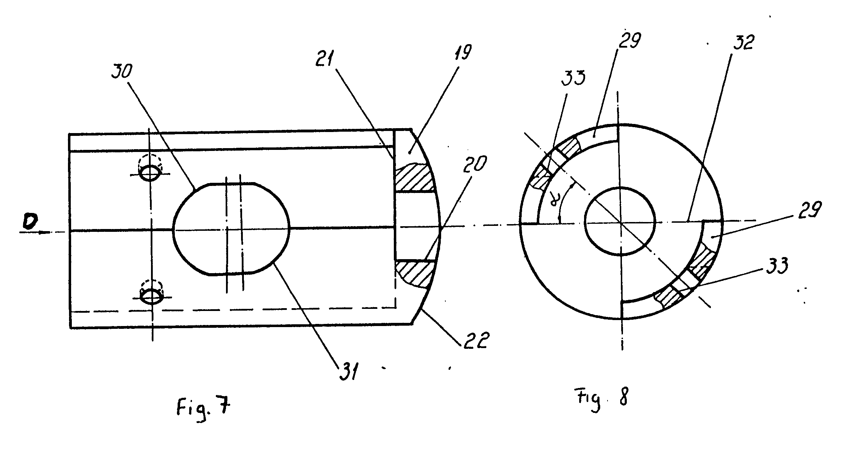

Fig. 8 die Ansicht D von Fig. 7.

Die planetarische Drahtzuführvorrichtung besteht aus einem Gehäuse 1, das zwei gleiche Zylinder, nämlich einen linken Zylinder 2 und einen rechten Zylinder 3, aufweist, deren Längsachse mit der der geometrischen Achse 4 eines Elektrodendrahtes 5 übereinstimmt. Der linke Zylinder 2 und der rechte Zylinder 3 stehen miteinander in einer Berührungsebene 6 in Berührung und sind mit Schrauben 7 befestigt. Jeder Zylinder weist Becheraufnahmeaussparungen 8, eine Buchsenaufnahmeaussparung 9 und Federaufnahmeaussparungen 10 auf, die halbzylindrisch sind, und deren gemeinsame Achse 11 senkrecht zur geometrischen Achse 4 des Elektrodendrahtes 5 und in der Berührebene 6 angeordnet ist. Auf der geometrischen Achse des linken Zylinders 2 und des rechten Zylinders 3 sind zylindrische Vorsprünge 12 angebracht, in deren vorderem Teil ein Zentrierhohlkegel 13, eine Stellgewindebohrung 14 und eine Zentralöffnung 15 aufgebildet sind. In den halbzylindrischen Aussparungen, nämlich in den Becheraufnahmeaussparungen 8, in den Buchsenaufnahmeaussparungen 9 und in den Federaufnahmeaussparungen 10 des linken Zylinders 2 und des rechten Zylinders 3 sind zwei identische Baugruppen, eine linke Baugruppe 16 und eine rechte Baugruppe 17, montiert, deren Achse mit der gemeinsamen Achse 11 übereinstimmt. Jede Baugruppe besteht aus einem Träger-Richtungselement 18, das als zylindrischer Becher mit einem eine Öffnung 20 aufweisenden Boden 19 ausgebildet ist. Die Innenseite des Bodens 19 hat eine ebene Oberfläche 21, die Außenfläche eine zylindrische Oberfläche 22. An den Enden der beiden Träger-Richtungselemente 18 sind eine rechte Antriebrolle 23 für die linke Baugruppe 16 bzw. eine linke Antriebsrolle 24 für die rechte Baugruppe 17 angeordnet, von denen jede auf einer Tragachse 25 montiert ist. Die linke Antriebsrolle 24 und die rechte Antriebsrolle 23 sind mit einem hyperbolischen Profil versehen. In den Tragachsen 25 sind Lagerachsen 26 angebracht. An den Enden der beiden Träger-Richtungselemente 18 sind Lagerbuchsen 27 angebracht. Die linke Baugruppe 16 und die rechte Baugruppe 17 sind, wenn sich kein Elektrodendraht in der Vorrichtung befindet, durch je einen Scheibenfedersatz 28 über die Lagerbuchsen 27 an die zylindrischen Vorsprünge 12 gedrückt. Jeder Scheibenfedersatz 28 ist in dem entsprechenden halbzylindrischen Federeinschnittpaar 10 angebracht. Die Seitenflächen 29 der Träger-Richtungselemente 18 sind als zwei viertelzylindrische Abschnitte mit zwei koaxialen Halböffnungen, nämlich einer vorderen Halböffnung 30 und einer hinteren Halböffnung 31 ausgebildet. Die viertelzylindrischen Abschnitte beider Träger-Richtungselemente liegen aneinander. Ihre Achse 32 stimmt mit der geometrischen Achse 4 des Elektrodendrahtes 5 überein. In den viertelzylindrischen Abschnitten sind auch zwei koaxiale Lageröffnungen 33 vorhanden, deren Achse senkrecht zur gemeinsamen Achse 11 der Aussparungen 8, 9, 10 ist und mit ihr einen Winkel α bildet. Die Lagerachsen 26 beider Träger-Richtungselemente 18 kreuzen sich unter einem Winkel 2α. Der

Elektrodendraht 5 ist auf der Winkelhalbierenden dieses Winkels angeordnet.

Die Vorrichtung arbeitet folgendermaßen:

Die Vorrichtung wird von einem Elektromotor (nicht gezeigt in den Zeichnungen) von vorn gesehen im Gegenuhrzeigersinn in Drehung versetzt. Das Ausrichten der Vorrichtung zum Elektromotor erfolgt über den Zentrierhohlkegel 13, das Fixieren durch die Stellgewindebohrung 14. Der Anfang des Elektrodendrahtes 5 wird vom Operateur durch die Öffnung der Hohlwelle des Elektromotors zur Zentralöffnung 15 der Vorrichtung geführt. Die Drahtzuführvorrichtung nimmt den Draht automatisch auf. Dabei leiten die linke Baugruppe 16 und die rechte Baugruppe 17 die Deformationskräfte der Scheibenfedersätze 28 durch die hyperbolischen Oberflächen der Antriebsrollen 23 und 24 auf den Elektrodendraht 5 weiter. Diese Kräfte und die Zentrifugalkräfte der Massen der linken Baugruppe 16 und der rechten Baugruppe 17 erzeugen Tangentialkräfte, die an der Achse 4 des Elektrodendrahtes 5 angreifen und ihn in Richtung der Schweißstation bewegen.

**Patentanspruch**

Planetare Drahtzuführvorrichtung mit einem aus zwei gleichen, einander berührenden, lösbar miteinander koaxial verbundenen Elementen (2, 3) bestehenden Gehäuse (1), mit wenigstens einer in den Elementen (2, 3) ausgebildeten koaxialen halbzylindrischen Aussparungen (8, 9, 10) angeordneten Baugruppe und mit zwei jeweils in der zugeordneten Baugruppe um eine Lagerachse (26) drehbar gelagerten Antriebsrollen (23, 24) mit hyperbolischem Profil, die jeweils durch einen Scheibenfedersatz (28) in Richtung der gemeinsamen Achse der Elemente (2, 3) gedrückt werden, wobei die Lagerachsen (26) in einem Winkel (2α) zueinander angeordnet sind und die in der Berührungsebene der Elemente liegende gemeinsame Achse der Aussparungen (8, 9, 10) senkrecht schneiden und die gemeinsame Achse der Elemente die Winkelhalbierende des Winkels (2α) zwischen den Lagerachsen (26) ist, dadurch gekennzeichnet,

daß die Elemente des Gehäuses (1) ein linker Zylinder (2) und ein rechter Zylinder (3) sind, in denen jeweils ein zu ihnen koaxialer zylindrischer Vorsprung (12) vorgesehen ist, in dessen vorderem Abschnitt ein Zentrierhohlkegel (13), eine Stellgewindebohrung (14) und eine Zentralöffnung (15) ausgebildet sind,

daß in den Zylindern (2, 3) Becheraufnahmeaussparungen (8), Federaufnahmeaussparungen (10) und Buchsenaufnahmeaussparungen (9) koaxial und halbzylindrisch ausgebildet sind, deren gemeinsame Achse senkrecht zur Längsachse der Zylinder (2, 3) in der Berührebene der Zylinder (2, 3) liegt und in denen zwei gleiche Baugruppen, eine linke Baugruppe (16) und eine rechte Baugruppe (17) angebracht sind, die jeweils aus einem Träger-Richtungselement (18) bestehen, das als zylindrischer Becher ausgebildet ist, dessen Boden eine Öffnung (20), an der Innenseite eine ebene Oberfläche (21) und an der Außenseite eine zylindrische Oberfläche (22) aufweist,

daß die Antriebsrollen (23, 24) jeweils an den Enden des entsprechenden Träger-Richtungselements (18) auf einer Tragachse (25) befestigt sind, in der die Lagerachse (26) angeordnet ist,

daß an den Enden der beiden Träger-Richtungselemente (18) Lagerbuchsen (27) angeordnet sind, die zusammen mit den in den entsprechenden Federaufnahmeaussparungen (10) angeordneten Scheibenfedersatz (28) die linke Baugruppe (16) bzw. die rechte Baugruppe (17) an die zylindrischen Vorsprünge (12) drücken,

daß die Seitenflächen (29) der Träger-Richtungselemente (18) jeweils zwei viertelzylindrische Abschnitte aufweisen, in denen eine vordere Halböffnung (30) bzw. eine hintere Halböffnung (31) koaxial zueinander und zu den Zylindern (2, 3) und koaxialen Lageröffnungen (33) ausgebildet sind, und

daß die viertelzylindrischen Abschnitte der beiden Träger-Richtungselemente (18) aneinanderliegen, wobei die gemeinsame Achse der Lageröffnungen (33) mit der Längsachse der Zylinder (2, 3) einen Winkel (α) bildet, der halb so groß ist wie der Winkel (2α) zwischen den beiden Lagerachsen (26).

**Revendication**

Dispositif planétaire d'amenée d'un fil, comportant un boîtier (1) constitué de deux éléments identiques (2, 3) placés en contact réciproque et reliés coaxialement l'un à l'autre de façon amovible, au moins un module disposé dans des évidements coaxiaux semi-cylindriques (8, 9, 10) ménagés dans les éléments (2, 3), et deux galets d'entraînement à profil hyperbolique (23, 24) montés chacun à rotation dans le module associé autour d'un axe support (26) et repoussés chacun par un jeu de rondelles élastiques (28) dans la direction de l'axe commun des éléments (2, 3), les axes supports (26) formant entre eux un angle (2α) et coupant à angle droit l'axe commun des évidements (8, 9, 10) qui est situé dans le plan de contact des éléments, tandis que l'axe commun de ces derniers est la bissectrice de l'angle (2α) délimitée par les axes supports (26), caractérisé en ce que:

les éléments du boîtier (1) sont constitués par un cylindre gauche (2) et un cylindre droit (3) dans lesquels sont respectivement prévues des parties saillantes cylindriques (12) qui sont coaxiales à ces cylindres et dans la partie avant desquelles sont formés un cône creux de centrage (13), un trou taraudé de réglage (14) et une ouverture centrale (15),

dans les cylindres (2, 3) sont ménagés, dans une position coaxiale et avec une forme semi-cylindrique, des évidements (8) de logement de godets, des évidements (10) de logement de ressorts et des évidements (9) de logement de coussinets, dont l'axe commun est perpendiculaire à l'axe longitudinal des cylindres (2, 3) dans le plan de contact de ces cylindres et dans lesquels sont disposés deux modules identiques, à savoir un module gauche (16) et un module droit (17) constitués chacun par un élément directif formant support (18) réalisé sous la forme d'un godet cylindrique dont le fond possède une ouverture (20), la face intérieure une surface plane (21) et la face extérieure une surface cylindrique (22),

les galets d'entraînement (23, 24) sont respectivement fixés au niveau des extrémités de l'élément directif formant support (18) correspondant, sur un arbre porteur (25) dans lequel est disposé l'axe support (26),

aux extrémités des deux éléments directifs formant supports (18) sont disposés des coussinets (27) qui, conjointement avec le jeu de rondelles élastiques (28) disposé dans l'évidement de logement de ressort (10) correspondant, repoussent le module gauche (16) ou le module droit (17) contre les parties saillantes cylindriques (12),

les faces latérales (29) des éléments directifs formant supports (18) possèdent chacun deux parties ayant la forme d'un quart de cylindre et dans lesquelles une demi-ouverture avant (30), respectivement une demi-ouverture arrière (31), sont ménagées de manière à être coaxiales l'une par rapport à l'autre et par rapport aux cylindres (2, 3) et à des ouvertures coaxiales de support (33), et

les parties en forme de quart de cylindre des deux éléments directifs formant supports (18) s'appliquent l'une contre l'autre, l'axe commun des ouvertures de support (33) formant avec l'axe longitudinal des cylindres (2, 3) un angle (α) égal à la moitié de l'angle (2α) délimité par les deux axes supports (26).

**Claim**

Planetary wire feeding device with a housing (1) consisting of two like elements (2, 3) contacting one another and which are releasably connected with one another, at least one assembly arranged in the coaxial semicylindrical recesses (8, 9, 10) formed in the elements (2, 3) and two drive rollers (23, 24) supported rotatably about a respective bearing shaft (26) in the associated assembly, which drive rollers (23, 24) have a hyperbolic profile and are respectively pressed by a plate spring assembly (28) in the direction of the common axis of the elements (2, 3), with the bearing shafts (26) being disposed at an angle (2α) to one another and cutting at right angles the common axis of the recesses (8, 9, 10) which lies in the contacting plane of the elements and with the common axis of the elements being the bisector of the angle (2α) between the bearing shafts (26), characterised in that,

the elements of the housing (1) are a left cylinder (2) and a right cylinder (3) in each of which a cylindrical projection (12) coaxially thereto is provided in whose front portion are formed a centering conical recess (13), a screw positioning passage (14) and a central opening (15),

cup receiving recesses (8), spring receiving recesses (10) and bushing receiving recesses (9) are formed coaxially and semicylindrically in the cylinders (2, 3), common axes thereof lie in the contact plane of the cylinder (2, 3) at right angles to the longitudinal axis of the cylinder (2, 3) and in which two like assemblies, a left assembly (16) and a right assembly (17) are attached each of which consists of a supporting-alignment element (18) which is formed as cylindrical cup whose base has an opening (20) and which has on the inside a planar surface (21) and on the outside a cylindrical surface (22),

the drive rollers (23, 24) are secured to the ends of the corresponding support alignment element (18) on a support axle (25) in which the bearing shafts (26) are arranged,

support bushings (27) are arranged at the end of the two supporting alignment elements (18),which bushings together with the plate spring assembly (28) arranged in the corresponding spring receiving recesses (10) press the left assembly (16) and the right assembly (17) respectively onto the cylindrical projections (12),

the side surfaces (29) of the supporting alignment elements (18) have respectively two quarter cylindrical sections in which a forward half opening (30) or a rear half opening (31) coaxial to one another and to the cylinders (2, 3) and coaxial support openings (33) are formed, and

the quarter cylindrical sections of the two supporting alignment elements (18) lie side by side with the common axis of the support openings (33) forming with the longitudinal axis of the cylinder (2, 3) an angle (α) which is half as large as the angle (2α) between the two bearing shafts (26).

Fig. 2

Fig. 1

1

Fig. 4

Fig. 3

2

Fig. 5

Fig. 6

Fig. 8

Fig. 7